# EUROPEAN PATENT APPLICATION

(11) **EP 0 976 430 A1**
(43) Date of publication of application: **02.02.2000**
(21) Application number: 99902921.8
(22) Date of filing: 16.02.1999
(51) Int. Cl.: A63F 9/22, G06F 15/02

(54) **PORTABLE ELECTRONIC DEVICE, ENTERTAINMENT SYSTEM, AND RECORDING MEDIUM**

(30) Priority: 16.02.1998 JP 5009798
(71) Applicant: Sony Computer Entertainment Inc., Tokyo 107-0052 (JP)
(72) Inventor: YAMAMOTO, Tetsuji, K.K. Shuga ando Rokettsu, Tokyo 107-0052 (JP); SUZUKI, Shunji, K.K. Shuga ando Rokettsu, Tokyo 107-0052 (JP); YAMAMOTO, Hiroshi, Niigata-shi, Niigata 950-0088 (JP); OHDAIRA, Toshimitsu, Niigata-shi, Niigata 950-0088 (JP); TOYOTA, Kazuki, Niigata-shi, Niigata 950-0088 (JP)
(74) Representative: Hedley, Nicholas James Matthew
(86) International application number: JP9900674
(87) International publication number: WO9940986

(57) **Abstract**

A portable electronic device comprising a connecter (42) for connection to a parent machine where a video game is played, a program memory (41a) stored with a program, control means (41) for controlling the execution of the program, display means (44) for displaying information according to the program to be executed, operation input means (43) for operating the program, wherein a mini game independently playable using the portable electronic device is transferred by operation during a video game played using the parent machine, and the parent machine reflects the results of the mini game.

## Description

### Technical Field

This invention relates to a portable electronic device used as an auxiliary storage device such as a memory card inserted into the master unit of information equipment, as well as an entertainment system such as a video game station having a function for storing game data or the like in an auxiliary storage device.

### Background Art

A portable electronic device or slave serving as an auxiliary storage device such as a conventional video card used upon being inserted into the master of information equipment such as a video game machine is equipped with an interface for making a connection to the console (master) of the information equipment and a non-volatile storage element for storing data.

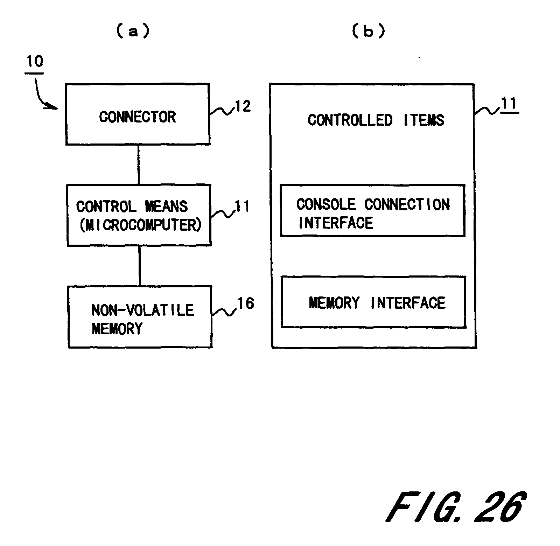

Fig. 26(a) illustrates an example of the arrangement of the principal components of a memory card, which is an example of such a portable electronic device according to the prior art. A conventional memory card according to the prior art has control means 11 for controlling the operation of the memory card, a connector 12 for making a connection to a terminal provided in a slot of information equipment or the like, and a non-volatile memory 16 for storing data. The connector 12 and the non-volatile memory 16 are connected to the control means 11.

The control means 11 is constituted by a microcomputer, by way of example. A flash memory such as an EEPROM, for example, is used as the non-volatile memory 16. There are also instances where the interface for the connection to the information equipment or the like employs a microcomputer as control means for interpreting protocols.

Fig. 26(b) illustrates the items controlled by the control means 11 of the conventional memory card 10.

As illustrated, the memory card merely has a console connection interface for connection to the console of the information equipment or the like, and a memory interface for input and output of data to and from the non-volatile memory.

Further, the conventional video game station such as a TV game station for home use has a function for storing game data and the like in an auxiliary storage device. The above-mentioned memory card is used also as an auxiliary storage device of such a video game station.

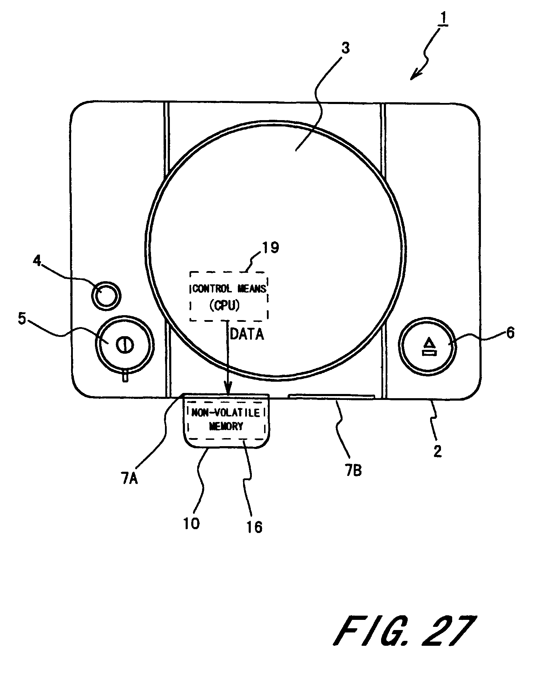

Fig. 27 illustrates an example of a conventional video game station that uses a memory card as an auxiliary storage device. This conventional video game station 1 has a console 2 accommodated within a substantially quadrangular case and is constituted by a centrally provided disk mounting unit 3 in which is mounted an optical disk serving as a recording medium on which the application program of a video game has been recorded, a reset switch 4 for resetting the game at will, a power-supply switch 5, a disk operating switch 6 manipulated for mounting the optical disk, and two slots 7A and 7B, by way of example.

The memory card 10 used as an auxiliary storage device is inserted into the slots 7A, 7B so that the results of a game, for example, that has been run on the video game station 1, are sent from control means (CPU) 19 and written to the non-volatile memory 16. An arrangement may also be adopted in which a plurality of control devices (controllers) (not shown) are connected to the slots 7A, 7B, thereby enabling a plurality of users to play competitive games against one another at the same time.

Consideration has been given to providing a slave, which is connected utilizing the memory-card slot of a video game station or the like serving as the master, not only with the storage function of an auxiliary storage device but also with a function for executing programs such as games. Such a slave can also be used as a portable electronic device as is, and by making it easy to communicate with other equipment, a wider range of applications can be achieved. This in turn can stimulate new demand.

The present invention, which has been devised in view of these circumstances, has as its object to provide a portable electronic device and an entertainment system, wherein the portable electronic device is capable of being connected to a master, can be used even as a stand-alone slave and readily communicates with other items of equipment.

### Disclosure of Invention

A portable electronic device according to the present invention is equipped with an interface for making a connection to a master having a program executing function, the portable electronic device comprising program storage means for storing a program, control means for controlling execution of the program, display means for displaying information in accordance with the program executed, and operation input means for operating the program, wherein a program capable of being executed independently by a slave is transmitted by an operation performed during execution of the program of the master.

Further, a portable electronic device according to the present invention is equipped with an interface for making a connection to a master having a program executing function, the portable electronic device comprising program storage means for storing a program, control means for controlling execution of the program, display means for displaying information in accordance with the program executed, and operation input means for operating the program, wherein an object in the program of the master is moved to display means of a slave by an operation performed during execution of the program.

An entertainment system according to the present invention comprises a master having a program executing function and a slave equipped with an interface for making a connection to the master, wherein the master has control means for transferring information accompanying execution of the program to the slave and for reading in information from the slave, and the slave has program storage means for storing a program, control means for controlling execution of the program, display means for displaying information in accordance with the program executed, and operation input means for operating the program, wherein a program capable of being executed independently by the slave is transmitted by an operation during execution of the program of the master.

Further, an entertainment system according to the present invention comprises a master having a program executing function and a slave equipped with an interface for making a connection to the master, wherein the master has control means for transferring information accompanying execution of the program to the slave and for reading in information from the slave, and the slave has program storage means for storing a program, control means for controlling execution of the program, display means for displaying information in accordance with the program executed, and operation input means for operating the program, wherein an object in the program of the master is moved to display means of a slave by an operation during execution of the program.

A recording medium according to the present invention has program data, which is executable by an information processor, recorded thereon in a manner capable of being read out, the recording medium being used in an information processing system comprising a first information processor for reading out the program data that has been recorded on the recording medium and for performing control based upon the program data, operating means for entering operating information, display means for processing an image generated by the information processor based upon the operating means, and a second information processor, which is connected to the first information processor, capable of inputting information to and outputting information from the first information processor and having at least an operating unit and a display unit, wherein program data for causing the information processor to execute processing has been recorded in a manner capable of being read out, the processing including a display step of displaying one or a plurality of virtual items on a screen formed by a program that runs on the first information processor, and a load step of loading information, which corresponds to a virtual item that has been selected on the screen, into the second information processor.

A recording medium is used in an information processing system comprising a first information processor for reading out program data that has been recorded on the recording medium and for performing control based upon the program data, operating means for entering operating information, display means for displaying an image generated by the information processor based upon the operating means, and a second information processor, which is connected to the first information processor, capable of inputting information to and outputting information from the first information processor and having at least an operating unit and a display unit, wherein software program data, which is capable of being run at least on the first information processor, and time are recorded on the recording medium in a manner capable of being read out, program data for causing the information processor to execute processing being recorded on the medium in a manner capable of being read out, the processing including a step of displaying an image, which is associated with the second information processor, on a screen formed by software that runs on the first information processor, a transfer step of transferring data representing a character to the second information processor when the position of the character is a display position of an image associated with the second information processor, a step of re-transferring the character data from the second information processor when a command indicating that the character is to be returned from the second information processor has been applied, and a step of making it possible to reuse the re-transferred character data on the screen formed by the software.

Thus, in accordance with the present invention as described above, a mini-game in a game being run on a master can be downloaded to a slave so that the game can be run independently on the slave. In addition, the results of the mini-game can be returned to the master and reflected in the game being run on the master. In other words, a mini-game can be purchased in a game and the mini-game can be run independently. As a result, the degree of freedom of the game is enhanced and characters can be moved easily between the master and the slave in the game. This makes it possible for a game to be played interactively between the master and the slave.

### Brief Description of the Drawings

Fig. 1 is a plan view illustrating the appearance of a video game station serving as a master in which a portable electronic device is used as a slave according to an embodiment of the present invention;
Fig. 2 is a back view showing the appearance of slots in the video game station serving as a master;
Fig. 3 is an external perspective view showing the appearance of the video game station serving as a master;
Fig. 4 is a block diagram illustrating a specific example of the arrangement of the principal components of the video game station serving as a master;
Fig. 5 is a plan view illustrating the appearance of an embodiment of portable electronic device according to the present invention;
Fig. 6 is a perspective view showing the appearance of the embodiment of portable electronic device according to the present invention;
Fig. 7 is a perspective view showing a portable electronic device in the opened state of a cover member in the embodiment of the portable electronic device according to the present invention;
Fig. 8 is a front view showing the appearance of an embodiment of the portable electronic device according to the present invention;
Fig. 9 is a block diagram showing an example of the arrangement of the principal components of the embodiment of the portable electronic device according to the present invention;
Fig. 10 is a diagram useful in describing a wireless communication function of the embodiment of the portable electronic device according to the present invention;
Fig. 11 is a diagram useful in describing cooperative operation between a slave which is an embodiment of the portable electronic device according to the present invention and the console of the video game station serving as the master;
Fig. 12 is a diagram showing the flow of program data downloaded from the video game station console (master)to the portable electronic device (slave);
Fig. 13 is a flowchart showing the download procedure of Fig. 12;
Fig. 14 is a diagram showing another flow of program data downloaded from the video game station console (master) to the portable electronic device (slave);
Fig. 15 is a flowchart showing the procedure of the download depicted in Fig. 14;
Fig. 16 is a diagram showing a display screen for purchasing a mini-game during a game;
Fig. 17 is a diagram showing a display screen displaying a game library;
Fig. 18 is a diagram showing a display screen of results of a mini-game capable of being loaded;
Fig. 19 shows the first half of a flowchart of a series of steps regarding execution of a mini-game during a game;
Fig. 20 shows the second half of the flowchart illustrated in Fig. 19;
Fig. 21 is a flowchart showing a series of steps executed on the side of a master regarding a mini-game in a game;
Fig. 22 is a diagram showing a display screen when a character is transferred from a master to a slave;
Fig. 23 is a diagram showing a display screen when a character is transferred from a slave to a master,
Fig. 24 is a flowchart showing a series of steps executed when a character is transferred from a master to a slave;
Fig. 25 is a flowchart showing a series of steps executed when a character is transferred from a slave to a master;
Fig. 26 is a diagram showing an example of the arrangement of the principal components of a conventional memory card; and
Fig. 27 is a diagram showing an example of a video game station using a memory card as an auxiliary storage device.

### Best Mode for Carrying Out the Invention

A preferred embodiment according to the present invention will now be described with reference to the drawings. A portable electronic device embodying the present invention can be used as a memory card employed in an entertainment system such as a video game station serving as the master. The portable electronic device can also be used separately as a hand-held game machine. It should be noted that the master is not limited to a video game station and that the portable electronic device serving as the slave need not necessarily have a memory card function.

In the description that follows, the present invention is described in regard to a video game station which is an example of a master in which a portable electronic device embodying the present invention is employed as a slave.

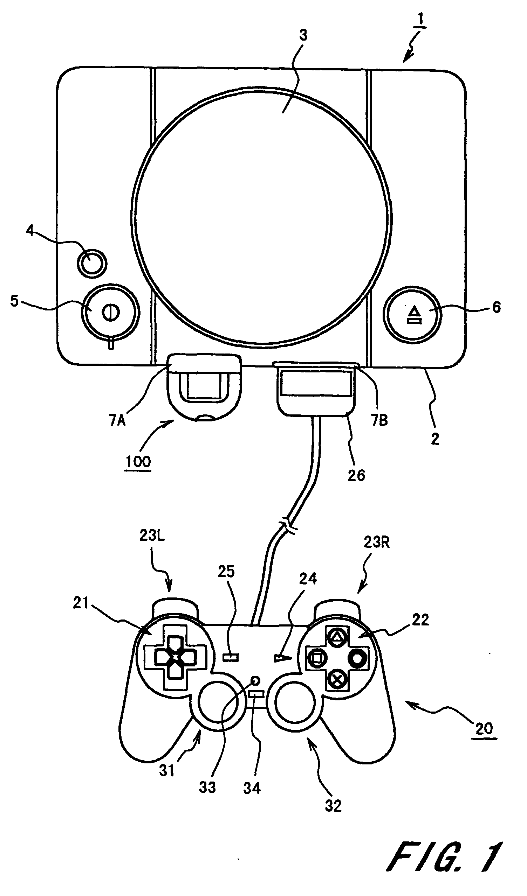

Fig. 1 shows the appearance of a video game station serving as the master in which the electronic device embodying the present invention is inserted. The video game station 1 is for reading out a game program that has been recorded on an optical disk or the like and for executing the program in accordance with commands from a user (the player of the game). Executing the game primarily means causing the game to proceed and controlling video and audio that conform to the content of the game.

The video game station 1 has a console 2 accommodated within a substantially quadrangular case and is constituted by a centrally provided disk mounting unit 3 in which is mounted an optical disk such as a CD-ROM serving as a recording medium for supplying an application program of a video game or the like, a reset switch 4 for resetting the game at will, a power-supply switch 5, a disk operating switch 6 manipulated for mounting the optical disk, and two slots 7A and 7B, by way of example.

It should be noted that the recording medium for supplying the application program is not limited to an optical disk. Further, an arrangement may be adopted in which the application program is supplied via a communications line.

Two controllers 20 can be connected to the slots 7A, 7B so that two users can play competitive games or the like against each other. The above-mentioned memory card or the portable electronic device embodying the present invention can be inserted into the slots 7A, 7B. Though Fig. 1 exemplifies a structure provided with the slots 7A, 7B of two systems, the number thereof is not limited to two.

The controller 20 has first and second control portions 21, 22 as well as a left button 23L, a right button 23R, a start button 24 and a select button 25. The controller further has control portions 31, 32 capable of analog control, a mode selection switch 33 for selecting the operating mode of the control portions 31, 32, and a display portion 34 for displaying the selected operating mode. Provided within the controller 20 is a vibration imparting mechanism, which is not shown.

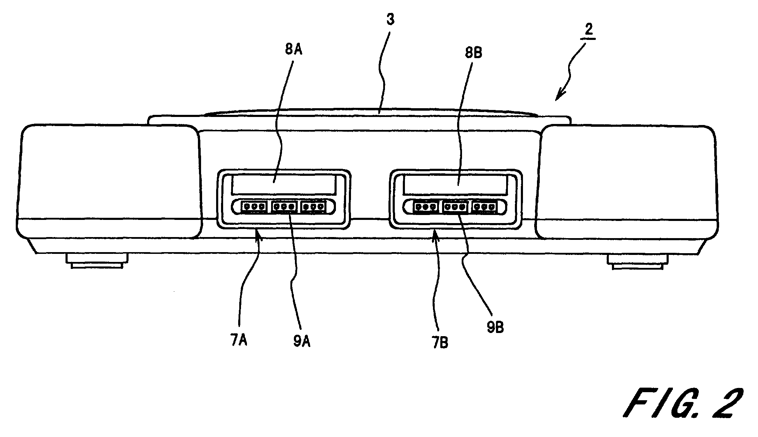

Fig. 2 shows the appearance of the slots 7A, 7B provided in the front side of the console 2 of video game station 1.

According to this embodiment, the slots 7A, 7B are each formed to have two levels. The upper levels of the respective slots are provided with memory card insertion portions 8A, 8B for inserting the above-mentioned memory card 10 or a portable electronic device 100, described later, and the lower levels of the respective slots are provided with controller connecting portions (jacks) 9A, 9B for connecting a connection terminal (connector) 26 of the controller 20.

Structurally, the insertion hole (slot) of each of the memory card insertion portions 8A, 8B is formed to have a transversely elongated rectangular shape, and the corners at both ends on the lower side thereof are made rounder than the corners at both ends on the upper side so that a memory card will not be inserted in the wrong direction. The memory card insertion portions 8A, 8B are provided with shutters which protect the connection terminals provided within the memory card insertion portions for the purpose of obtaining an electrical connection.

Structurally, the controller connecting portions 9A, 9B, on the other hand, each have an insertion hole of a transversely elongated rectangular shape, and the corners at both ends on the lower side thereof are made rounder than the corners at both ends on the upper side, whereby the connection terminal 26 of the controller 20 will not be connected in the wrong direction. The memory card insertion portions 8A, 8B are structured to have insertion holes of different shapes in such a manner that a memory card will not be inserted by mistake.

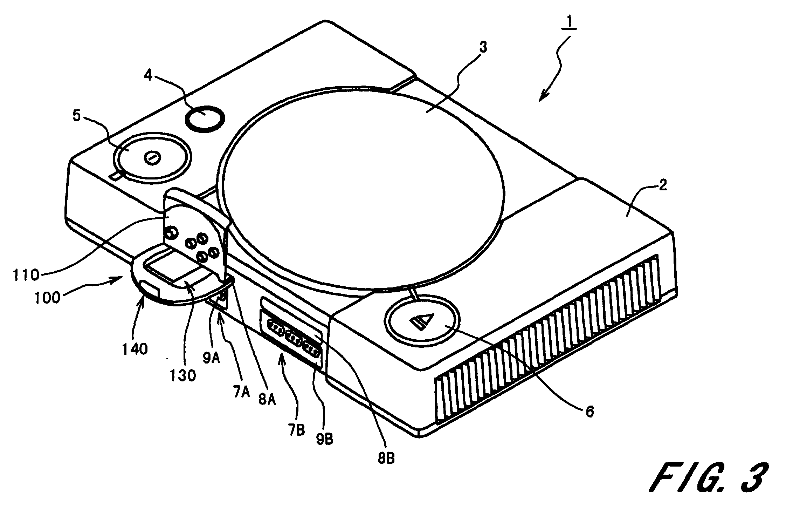

Fig. 3 shows a state in which the portable electronic device 100 (described later) embodying the present invention has been inserted into the memory card insertion portion 8A of slot 7A in the front side of the video game station 1.

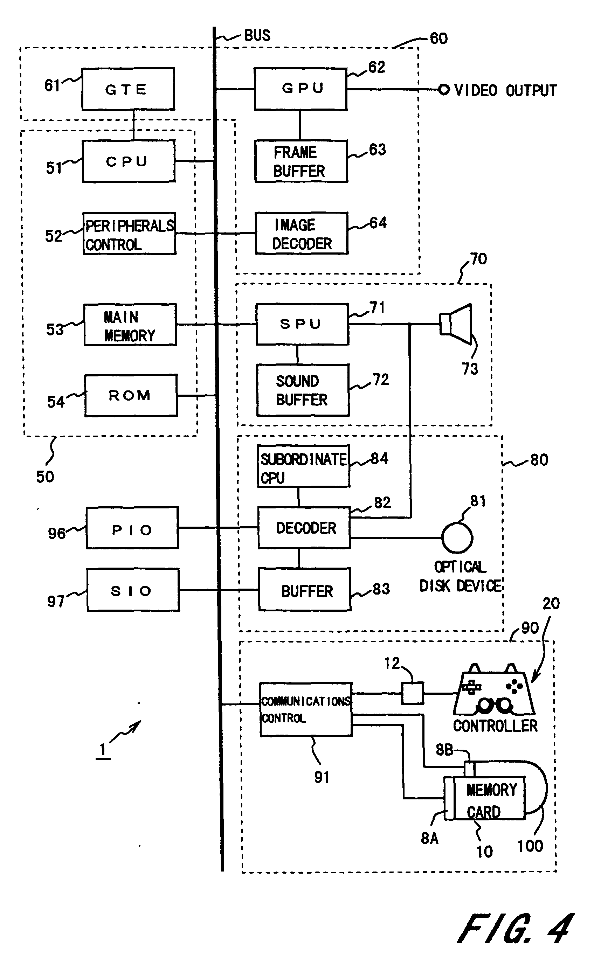

Fig. 4 is a block diagram showing schematically an example of the circuitry of the principal components of the above-described video game station 1.

The video game station 1 has a control system 50 comprising a central processing unit (CPU) 51 and its peripherals; a graphics system 60 comprising a graphic processing unit (GPU) 62, etc., for drawing graphics in a frame buffer 63; a sound system 70 comprising a sound processing unit (SPU) 71, etc., for generating music and sound effects, etc.; an optical-disk controller 80 for controlling an optical disk on which an application program has been recorded; a communications controller 90 for controlling input and output of data to and from the memory card 10, which stores signals and game settings from the controller 20 to which commands from the user are input, or portable electronic device 100, described later; and a bus denoted BUS to which each of the foregoing components is connected.

The control system 50 has the CPU 51, a peripherals controller 52 for performing control such as interrupt control and control of direct memory access (DMA) transfer, a main memory 53 comprising a random-access memory (RAM); and a read-only memory (ROM) 54 storing a program such as a so-called operating system that controls the main memory 53, graphic system 60 and sound system 70. The main memory mentioned here refers to a memory in which programs can be executed.

The CPU 51, which performs overall control of the video game station 1 by executing the operating system that has been stored in the ROM 54, is constituted by a 32-bit RISC-CPU, by way of example.

When power is introduced to this video game station 1, the CPU 51 of the control system 50 runs the operating system stored in the ROM 54, whereby the CPU 51 controls the graphics system 60 and sound system 70, etc. Further, when the operating system is run, the CPU 51 performs initialization of the overall video game station 1, such as verification of the operation thereof, and then controls the optical-disk controller 80 to execute an application program such as a game that has been recorded on an optical disk. In response to execution of a program, such as a game, the CPU 51 controls the graphics system 60 and sound system 70, etc., in conformity with inputs from user, thereby controlling the display of images and the generation of sound effects and music.

The graphics system 60 has a geometry transfer engine (GTE) 61 for executing coordinate transformation and the like, the GPU 62 for drawing graphics in accordance with a draw command from the CPU 51, a frame buffer 63 for storing an image drawn by the GPU 62, and an image decoder 64 for decoding image data that has been compressed and encoded by an orthogonal transformation such as a discrete cosine transformation.

The GTE 61, which has a parallel operation mechanism for executing a plurality of arithmetic operations in parallel, is capable of executing a coordinate transformation, light-source calculation and matrix or vector operation, etc., at high speed in response to an operation request from the CPU 51. More specifically, in case of a calculation where one polygon of a triangular shape is subjected to flat shading so as to be rendered in the same color, the GTE 61 is capable of calculating the coordinates of a maximum of 1,500,000 polygons in one second. As a result, the video game station is capable of reducing the load upon the CPU 51 and of calculating coordinates at high speed.

The GPU 62 draws polygons and the like in the frame buffer 63 in accordance with a draw command from the CPU 51. The GPU 62 is capable of drawing a maximum of 360,000 polygons in one second.

The frame buffer 63, which comprises a so-called dual-port RAM, is capable of performing simultaneously the transfer of draw data from the GPU 62 or main memory and read-out for displaying what has been drawn. The frame buffer 63, which has a capacity of 1 MB, for example, is treated as a 16-bit matrix composed of 1024 pixels in the horizontal direction and 512 pixels in the vertical direction. Further, besides a display area from which data is output as video, the frame buffer 63 is provided with a CLUT area in which is stored a color look-up table (CLUT) to which reference is had when the GPU 62 draws polygons or the like, and a texture area, in which is stored texture subjected to a coordinate transformation at the time of drawing and then inserted into (mapped to) polygons drawn by the GPU 62. The CLUT area and texture area change dynamically in accordance with a change, etc., in the display area.

Besides performing the flat shading mentioned above, the GPU 62 is capable of executing Gouraud shading, which decides the color in a polygon by interpolation from the colors at the apices of the polygon, and texture mapping, in which texture that has been stored in the texture area is mapped to polygons. In a case where Gouraud shading or texture mapping is carded out, the GTE 61 is capable of calculating the coordinates of a maximum of 500,000 polygons in one second.

Furthermore, under control of the CPU 51, the image decoder 64 decodes image data representing still or moving images stored in the main memory 53, and stores the decoded data in the main memory 53.

The image data thus reproduced is stored in the frame buffer 63 via the GPU 62, whereby the image data is capable of being used as the background of the image drawn by the GPU 62.

The sound system 70 has an SPU 71 for generating music and sound effects based upon a command from the CPU 51, a sound buffer 72 in which data such as waveform data is stored by the SPU 71, and a speaker 73 for outputting music and sound effects, etc., generated by the SPU 71.

The SPU 71 has an ADPCM decoding function for reproducing audio data obtained by adaptive differential PCM (ADPCM) using 16-bit audio data as a 4-bit differential signal, a reproducing function for generating sound effects and the like by reproducing waveform data that has been stored in the sound buffer 72, and a modulating function for modulating and reproducing the waveform data that has been recorded in the sound buffer 72.

Provision of these functions enables the sound system 70 to be used as a so-called sampling sound source, which generates music and sound effects, based upon the waveform data recorded in the sound buffer 72, in response to a command from the CPU 51.

The optical-disk controller 80 has an optical disk device 81 for reproducing programs, data and the like that have been recorded on an optical disk, a decoder 82 for decoding programs, data and the like that have been recorded following assignment of, e.g., error correction codes (ECC) thereto, and a buffer 83 in which data from the optical disk device 81 is stored temporarily, thereby speeding up the read-out of data from the optical disk. A subordinate CPU 84 is connected to the decoder 82.

In addition to ADPCM data, so-called PCM data, which is the result of subjecting an audio signal to an analog-to-digital conversion, is an example of audio data recorded on the optical disk and read out by the optical disk device 81.

As for ADPCM data, audio data that has been recorded using four bits to express, e.g., a 16-bit digital data differential is decoded by the decoder 82, after which the decoded data is supplied to the SPU 71. Here the data is subjected to processing such as a digital/analog conversion and then is used to drive the speaker 73.

As for PCM data, audio data that has been recorded as, e.g., 16-bit digital data is decoded by the decoder 82 and is then used to drive the speaker 73.

The communications controller 90 has a communications controller 91 for controlling communication with the CPU 51 via the bus denoted BUS. The communications controller 91 is provided with controller connecting portions 9A, 9B, to which the controller 20 for entering commands from the user is connected, and with memory card insertion portions 8A, 8B, to which is connected the memory card 10 or portable electronic device 100, described later, serving as an auxiliary storage device for storing game settings data and the like.

The controller 20 connected to the controller connecting portions 9 has, say, 16 instruction keys in order that the user may enter commands. In accordance with a command from the communications controller 91, the controller 20 transmits the states of these instruction keys to the communications controller 91 at a cycle of 60 times per second by synchronous communication. The communications controller 91 transmits the states of the instruction keys of controller 20 to the CPU 51.

As a result, the command from the user is input to the CPU 51 which, on the basis of the game program, etc., currently being run, executes processing that is in accordance with the command from the user.

It is required that a large quantity of image data be transferred at high speed when program read-out, image display and drawing of graphics, etc., are executed among the main memory 53, GPU 62, image decoder 64 and decoder 82. Accordingly, the video game station is so adapted that so-called DMA transfer can be carried out for direct transfer of data among the main memory 53, GPU 62, image decoder 64 and decoder 82 by control from the peripherals controller 52 without the intervention of the CPU 51. As a result, the load on the CPU 51 that accompanies data transfer can be alleviated and high-speed data transfer can be performed.

When it is necessary to store setup data of a game currently being run, the CPU 51 transmits the data that is to be stored to the communications control circuit 91. Upon receiving the data sent from the CPU 51, the communications controller 91 writes the data to the memory card 10 or portable electronic device 100 that has been inserted into the slot of memory card insertion portion 8A or 8B.

It should be noted that the communications controller 91 has a built-in protection circuit to prevent electrical destruction. The memory card 10 and portable electronic device 100, which are separate from the bus denoted BUS, can be inserted and extracted in a state in which the game station console is being supplied with power. In situations where the storage capacity of the memory card 10 or portable electronic device 100 is no longer adequate, therefore, a new memory card can be inserted without cutting off power to the console. As a result, game data requiring power back-up will not be lost; a new memory card can be inserted and the necessary data can be written to the new memory card.

A parallel I/O interface (PIO) 96 and a serial I/O interface (SIO) 97 are interfaces for connecting the memory card 10 and portable electronic device 100 to the video game station 1.

The portable electronic device embodying the present invention will be described next. It is assumed below that the portable electronic device 100 according to the present invention is used as a slave upon being inserted into the above-described video game station 1 serving as the master.

The portable electronic device 100 serving as the slave is inserted into either of the memory card insertion portions 8A, 8B provided in the slots 7A, 7B, respectively, of the video game station 1 serving as the master. Portable electronic devices can be used also as unique memory cards corresponding to a plurality of connected controllers 20. For example, in an instance where two users (game players) play the game, the two portable electronic devices 100 function so that the game results of the individual users are recorded on respective ones of the two portable electronic devices.

The connector of the memory card 10 or portable electronic device 100 is so adapted that the conductor of the connection terminal for the power supply or for ground is formed to be longer than the other terminals in such a manner that the power-supply terminal or ground terminal will form an electrical connection first when the memory card 10 or portable electronic device 100 is inserted into the memory card insertion portions 8A, 8B. This is to ensure the safety and stability of electrical operation. An arrangement may be adopted in which the connection conductors of the memory card insertion portions 8A, 8B provided in the video game station 1 are formed to be longer, or in which both of the conductors are formed to be longer. Further, the connector portions are formed to have left/right asymmetry in order to prevent erroneous insertion.

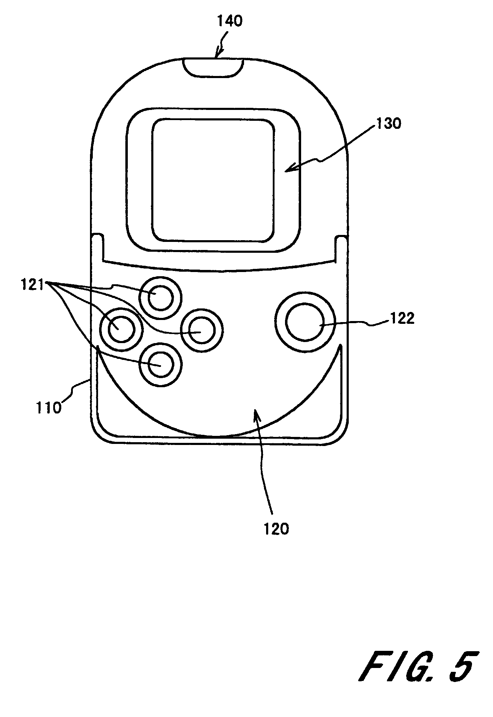

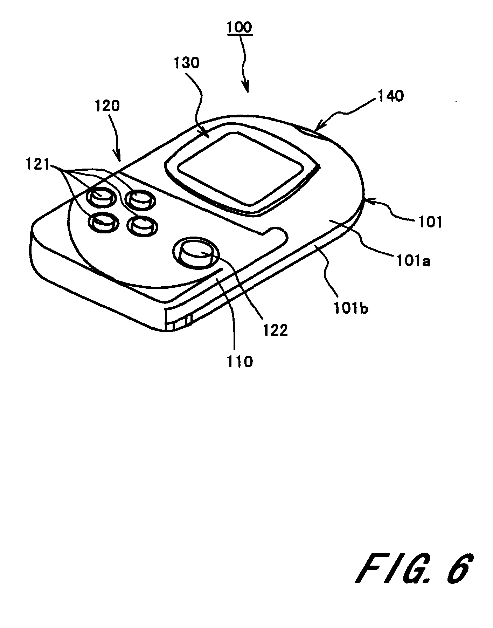

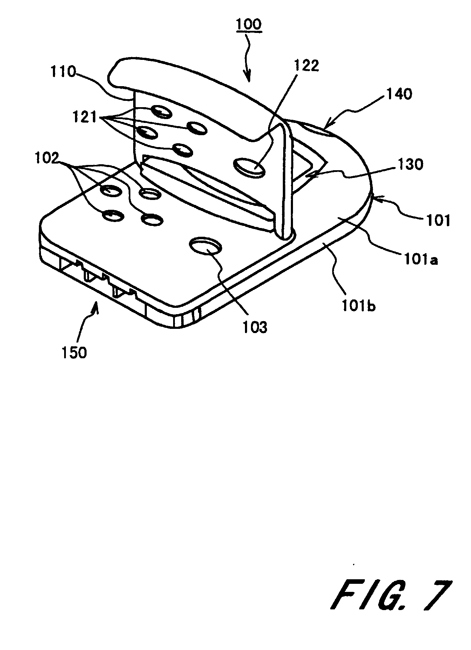

Figs. 5 to 7 illustrate the appearance of the portable electronic device 100 embodying the present invention, in which Fig. 5 is a plan view of the portable electronic device 100, Fig. 6 a perspective view in which a cover member 110 for protecting the connector portion is shown in the closed state, and Fig. 7 a perspective view showing the cover member 110 in the open state.

As shown in Figs. 5 to 7, the portable electronic device 100 according to the present invention has a housing 101. The housing 101 is provided with an operating section 120 having one or a plurality of operating elements 121, 122 for entering events and making various selections, a display section 130 comprising a liquid crystal display device (LCD), and a window 140 for performing wireless communication, as by infrared, by wireless communications means, described later.

The housing 101 comprises an upper shell 101a and a lower shell 101b and houses a substrate 151 mourning memory devices and the like. The housing 101 is capable of being inserted into the slots 7A, 7B in the console of the video game station 1. The base end of the housing has a side face provided with a connector portion 150 formed to have a rectangular-shaped opening.

The window 140 is provided in the generally semi-circular other end of the housing 101. The display section 130 is provided at a position in the vicinity of the window 140 on the top side of the housing 101 and occupies an area that is approximately half of the top side. The operating section 120 is provided at a portion opposite the window 140 on the top side of the housing 101 and occupies an area that is approximately half of the top surface. The operating section 120 has a substantially quadrangular shape and is constituted by a cover member 110, which is pivotally supported on the housing 101 and has one or plurality of operating elements 121, 122, and switch pushers 102, 103 provided at a position opened and closed by the cover member 110 on housing 101.

The operating elements 121, 122 are disposed passing through the cover member 110 from its upper to its lower side. The operating elements 121, 122 are supported on the cover member 110 in such fashion as to be movable in a direction in which they recede from the top side of the cover member 110.

The switch pushers 102, 103 have pushing elements supported on the housing 101 in such fashion as to be movable in a direction in which they recede from the top side of the cover housing 101. By pushing the pushing elements from above, push switches such as diaphragm switches disposed on the substrate 151 in the housing 101 are pushed.

The switch pushers 102, 103 are provided at positions corresponding to the positions of the operating elements 121, 122 when the cover member 110 is closed. More specifically, when the operating elements 121, 122 are pushed from above in a direction in which they recede from the top side of the cover member 110 in the closed state, the operating elements 121, 122 push the corresponding push switches in the housing 101 via the pushing elements of the corresponding switch pushers 102, 103.

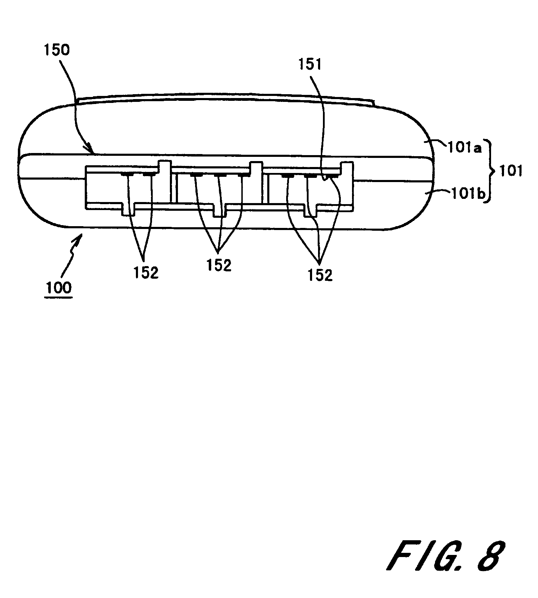

As shown in Fig. 8, power and signal terminals 152 are disposed on the substrate 151 within the window of the connector portion 150.

The shape, dimensions, etc. of the connector portion 150 are common with those of the ordinary memory card 10 used with the video game station 1.

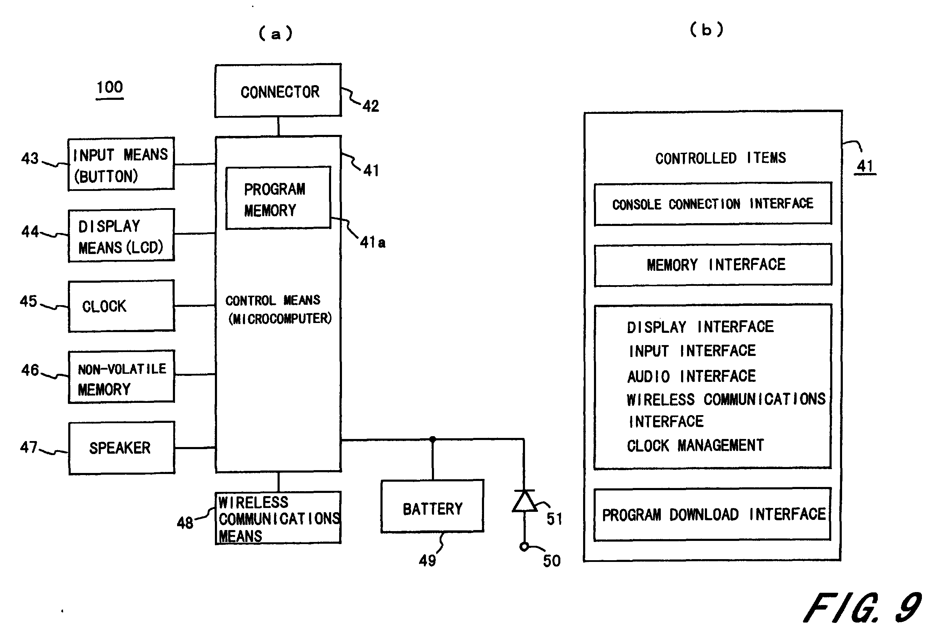

Fig. 9(a) is a block diagram showing an example of the arrangement of the principal components of the portable electronic device.

In a manner similar to the ordinary memory card 10 described above, the portable electronic device 100 has control means 41 for controlling its operation, a connector 42 for effecting a connection to a slot of information equipment or the like, and a non-volatile memory 46 serving as a device for storing data.

The control means 41, which is constituted by, say, a microcomputer, has an internally provided program memory 41a. A semiconductor memory device in which the state of recorded data remains intact even when power is cut off, as in the manner of a flash memory, is used as the non-volatile memory 46. It should be noted that the because the portable electronic device 100 according to the present invention is configured to be equipped with a battery 49, as will be described later, a static random-access memory (SRAM) capable of high-speed input/output of data can be used as the non-volatile memory 46.

The portable electronic device 100 differs in that in addition to the components mentioned above, it has operation (event) input means 43 such as operating buttons for operating a stored program, display means 44 such as a liquid crystal display device (LCD) serving as display means for displaying various information in conformity with the above-mentioned program, wireless communications means 48 for sending data to and receiving data from another memory card or the like by infrared radiation, and a battery 49 for powering each of the foregoing components.

The portable electronic device 100 internally accommodates a miniature battery 49 as power supply means. This means that the portable electronic device is capable of operating independently even if it has been pulled out of the slots 7A, 7B of the video game station 1 constituting the master. A rechargeable secondary cell may be used as the battery 49. It is so arranged that power is supplied from the video game station 1 serving as the master when the portable electronic device 100 serving as the slave has been inserted into either of the slots 7A, 7B of the video game station 1 serving as the master. That is, a power-supply terminal 50 is connected to the connection terminal of the battery 49 via a diode 51 for preventing reverse current. When the portable electronic device has been connected by insertion into the slot of the master, such as the video game station 1, power is supplied from the master to the slave. Furthermore, in a case where a secondary cell is being used, charging of the secondary cell also takes place.

The portable electronic device 100 further includes a clock 45 and a speaker 47, which serves as sound generating means for generating sound in conformity with the program. It should be noted that the above-mentioned components are all connected to the control means 41 and operate in accordance with control exercised by the control means 41.

Fig. 9(b) illustrates the items controlled by the control means 41. Though the only interfaces with which the ordinary memory card 10 is equipped are the interface for the connection to the console of the information equipment and the memory interface for input/output of data with respect to memory, the portable electronic device 100 of this embodiment has, in addition to these interfaces, a display interface, an operation-input interface, an audio interface, a wireless communications interface, a clock interface and a program-download interface.

Thus, the interfaces (drivers) for managing the functions added on by the present embodiment are provided in the control means (microcomputer) 41 independently of the console (master) connection interface and independently of non-volatile memory management, which are the conventional functions. For this reason compatibility with the conventional functions can be maintained.

Further, since the portable electronic device 100 has the input means 43, such as a button switch, for operating an executed program, and the display means 44 using the liquid crystal display device (LCD) or the like, the portable electronic device 100 is capable of being used as a hand-held game machine for running a game application.

Moreover, since the portable electronic device 100 possesses a function for storing application programs, which are downloaded from the console of the video game station 1, in the program memory 41a in microcomputer 14, application programs can be run on the portable electronic device 100. The stored application programs and various types of driver software can be altered with facility.

The portable electronic device 100 according to this embodiment can be controlled independently of the video game station 1, as described above. On the side of the portable electronic device 100, therefore, data based upon an application program that has been stored in the program memory 41a serving as the program storage means can be created independently of the application software on the side of the video game station 1. By exchanging this data with the video game station 1, the portable electronic device 100 and the video game station 1 are capable of cooperative (linked) operation.

Furthermore, the fact that the portable electronic device 100 is equipped with the clock 45 makes it possible for time data to be shared with the video game station 1. In other words, not only is mutual time data made to coincide but both the video game station and the portable electronic device also share data that is for controlling, in real time, the progress of games that are run on them independently.

A specific example of the cooperative operation between the video game station 1 and portable electronic device 100 will be described later.

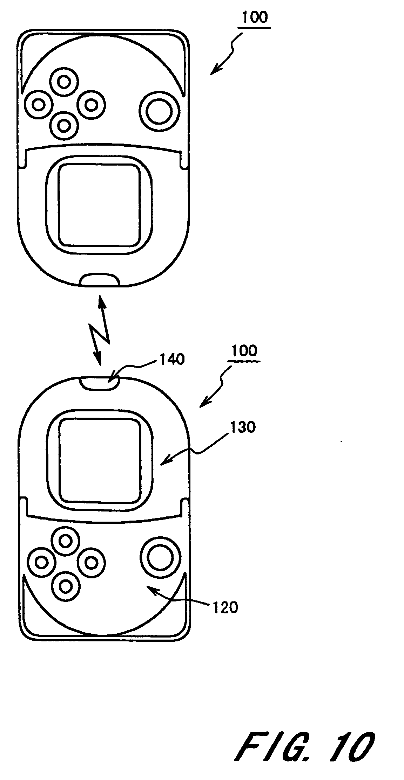

Fig. 10 illustrates schematically the manner in which wireless communication is performed between portable electronic devices 100 according to the present invention. By thus utilizing the wireless communications means 48, the portable electronic device 100 can exchange internal data with a plurality of memory cards by sending and receiving data via the window 140, which is a wireless communication window for performing wireless communication by infrared or the like. The internal data includes also data that has been transferred from the side of information equipment, such as the video game station, and stored in storage means within a memory card.

In the embodiment set forth above, the portable electronic device 100 is described as being used as the auxiliary storage device of a video game station. However, the object of application is not limited to a video game station, and the device is of course applicable to, e.g., the retrieval of various information.

The invention will now be described in regard to cooperative operation between the portable electronic device 100 and the video game station 1 serving as the master.

As mentioned above, the portable electronic device 100 and the console of video game station 1 can share game data generated by the microcomputer 41 serving as control means, time data obtained by the clock 45 in the memory card, and data generated by another memory card and obtained via the wireless communications means 48, etc.

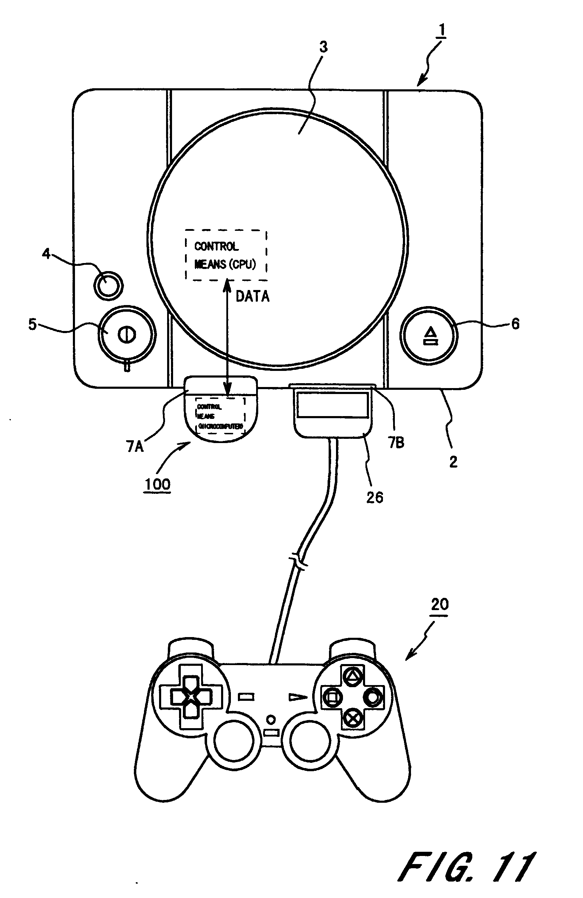

Fig. 11 illustrates schematically the manner in which the video game station 1 serving as the master and the portable electronic device 100 serving as the slave perform a cooperative operation.

Described below as an example of such cooperative operation is a case where an optical disk (CD-ROM), which is a recording medium on which an application software program has been recorded, has been loaded in the video game station 1 serving as the master, and the program read out of the disk is downloaded to the portable electronic device 100 serving as the slave inserted into either of the slots 7A, 7B of the console of the video game station 1.

Downloading of a program on the assumption that it is for performing a cooperative operation will be discussed before giving a specific description regarding the cooperative operation.

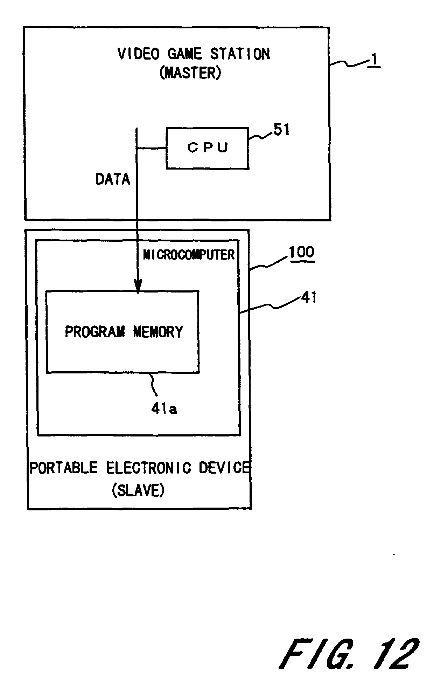

Fig. 12 illustrates the flow of data in an instance where the application program of a video game supplied from an optical disk (CD-ROM), etc., mounted on the disk mounting unit 3 of the master video game station 1 is transferred directly (downloaded) to the program memory 41a serving as program storage means in the microcomputer 41, which is the control means of the portable electronic device 100 serving as the slave, via the control means (CPU) 51 of video game station 1.

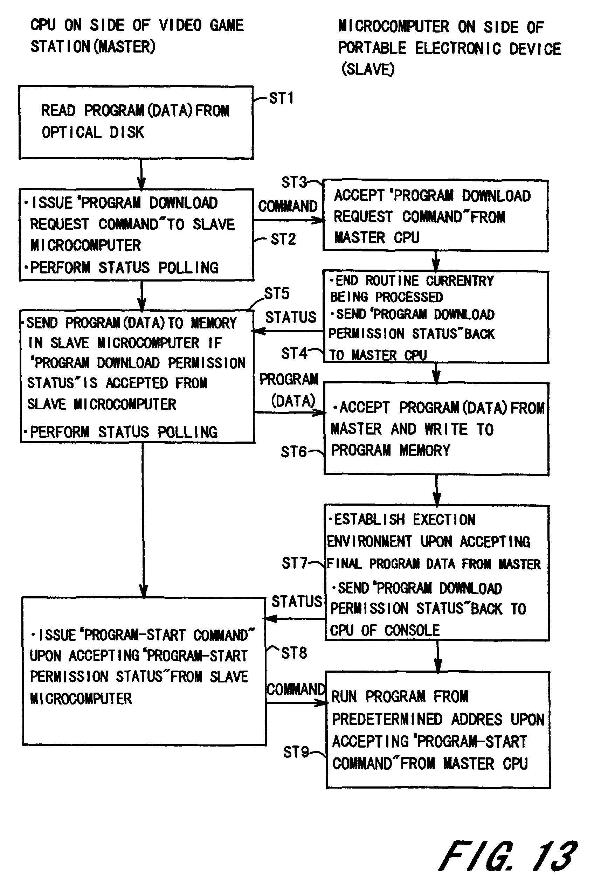

Fig. 13 illustrates the download procedure of Fig. 12.

At step ST1, the application program of a video game that runs on the microcomputer in the slave portable electronic device 100 (referred to simply as the "slave" hereafter) is read as data out of the CD-ROM that has been mounted on the disk mounting unit 3 of the master video game station 1 (referred to simply as the "master" hereafter). As mentioned earlier, this application program generally is different from that which runs on the master video game station 1.

Next, at step ST2, the CPU 51 serving as the control means of the master issues a "program download request command" to the microcomputer 41 serving as the control means of the slave portable electronic device 100. The CPU 51 performs polling in order to accept "program download permission status" from the microcomputer 41. The polling mentioned here refers to a method of performing a service upon inquiring as to whether the service has been requested or not.

The microcomputer 41 of the portable electronic device 100 serving as the slave accepts the "program download request command" from the CPU 51 of the master at step ST3.

When the microcomputer 41 on the slave side ends the routine currently being processed and a state in which program download can be executed is attained, the microcomputer sends "program download permission status" back to the CPU 51 of the master at step ST4.

Next, upon accepting "program download permission status" from the microcomputer 41 on the slave side at step ST5, the CPU 51 of the master transfers (downloads) and writes the program, which was read out of the CD-ROM at step ST1, to the program memory 41a serving as the program storage means of portable electronic device 100. The CPU 5 performs polling in order to accept "program-start permission status" from the microcomputer 41.

The address of the program memory 41a to which the downloaded data is written is managed by the microcomputer 41 of the slave at this time. In the description rendered above, a case in which the program downloaded from the master is stored in the program memory 41a within the microcomputer 41 is taken as an example. However, an arrangement may be adopted in which the program is stored in a storage device such as an SRAM that is capable of inputting and outputting data at high speed.

The microcomputer 41 of the memory card accepts as data the program that has been transferred from the master and writes this data to the program memory 41a at step ST6. From the point of view of the CPU 51 of the master, it appears that the program data is being written directly to the program memory 41a of the portable electronic device 100 serving as slave. In addition, the address of the program memory 41a is managed by the microcomputer 41.

Upon accepting the final program data from the master and then establishing an environment in which the program can be executed, the microcomputer 41 of the portable electronic device 100 sends "program-start permission status" back to the CPU 51 of the console at step ST7.

The CPU 51 of the master accepts "program-start permission status" from the microcomputer 41 of the portable electronic device 100 and issues a "program-start command" at step ST8.

Upon receiving the "program-start command" from the CPU 51 of the master, the microcomputer 41 of the portable electronic device 100 starts running the program from a predetermined starting address.

By way of the foregoing procedure, the application program is transferred directly (downloaded) from the master video game station 1 to the program memory 41a in the microcomputer 41 of the portable electronic device 100 serving as the slave that has been inserted.

As mentioned above, the means which supplies the application program is not limited to a storage medium such as the optical disk, and an arrangement in which it is supplied via a communication line may be adopted. Only step ST1 would differ in the above-described procedure in such case.

It should be noted that the foregoing download procedure has been described for a case where the application program is downloaded directly from the video game station 1 of the master to the program memory 41a in the microcomputer 41 of serving as the control means of the portable electronic device 100 slave that has been inserted.

By contrast there is also a case where the CPU 51 of the master downloads the data of an application program to the non-volatile memory 46 in the slave portable electronic device 100, after which this data is copied to the program memory 41a in the microcomputer 41, where the program is then executed.

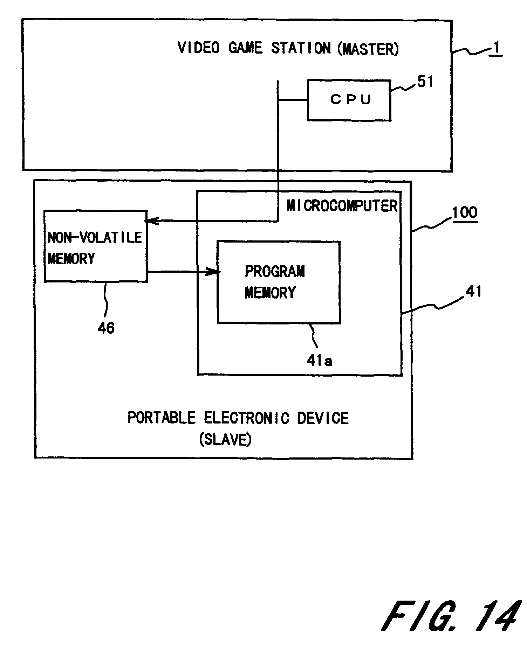

Fig. 14 illustrates the flow of data in such case. Specifically, the application program of a video game supplied from an optical disk or the like mounted on the disk mounting unit 3 of the master video game station 1 is transferred (downloaded) to the non-volatile memory 46 in the portable electronic device 100 serving as the slave via the CPU 51 serving as the control means of the video game console 1, after which the program is copied to the program memory 41a in the microcomputer 41 and executed.

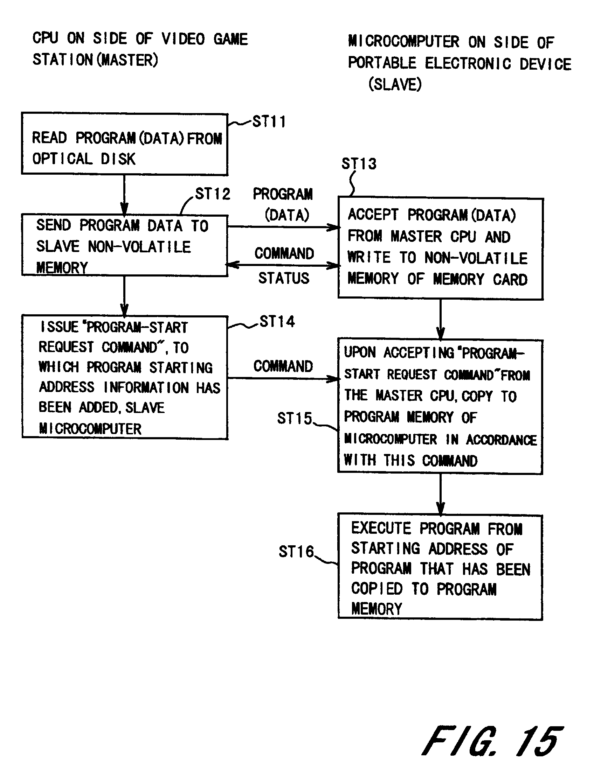

Fig. 15 illustrates the download procedure.

At step ST11, the application program of a video game that runs on the microcomputer in the portable electronic device 100 serving as the slave is read as data out of the CD-ROM that has been mounted on the disk mounting unit 3 of the video game station 1 serving as the master.

Next, at step ST12, the CPU 51 of the master transfers (downloads) the program data read out of the CD-ROM to the non-volatile memory 46 of the portable electronic device 100 serving as the slave. This procedure is similar to that of the case where data is backed up in the conventional video game station.

Next, at step ST13, by means similar to that for conventional data backup, the microcomputer 41 serving as the control means of the portable electronic device 100 accepts as data the application program that has been transferred from the CPU 51 of the master and writes this data to the non-volatile memory 46.

This is followed by step ST14 where, upon receiving a "program-start request command" from the CPU 51 of the master, the microcomputer 41 of the portable electronic device 100 copies data of a designated size from an address of the non-volatile memory 46 designated by the above-mentioned command to the program memory 41a in the microcomputer 41.

The microcomputer 41 of the portable electronic device 100 executes the program, which was copied to the program memory 41a, from the starting address of this memory.

By way of the foregoing procedure, the program of the application software is transferred (downloaded) as data, via the non-volatile memory 46, from the master video game station 1 to the program memory 41a in the microcomputer 41 of the portable electronic device 100 that has been inserted.

It should be noted that the application program downloaded from the video game station 1 to the portable electronic device 100 generally is different from that which runs on the master video game station 1. Of course, the above-mentioned downloaded application program may be one that runs on both the video game station 1 and the portable electronic device 100. In such case, however, a constraint imposed is that the CPU on the side of the video game station 1 and the microcomputer on the side of the portable electronic device 100 be identical processors.

Described next will be cooperative operation performed while the application software that has been downloaded from the master video game station 1 through the foregoing procedure is executed in the slave portable electronic device 100 independently and the result of execution is again exchanged with the video game station 1.

Here attribute data of personages or characters that appear in a so-called role-playing game that runs on the video game station 1 of the master is downloaded to the portable electronic device 100 of the slave. The attribute data is data that represents extent of growth, personality, etc.

By nurturing the appearing personages or characters in the program executed by the microcomputer 41 within the slave portable electronic device 100, the attributes thereof are caused to change independently of the program executed by the console of the video game station 1 serving as the master.

The portable electronic device 100 embodying the present invention is configured so as to operate independently and, moreover, is small in size and convenient to carry about. As a result, the personages and characters that make an appearance owing to the program run on the portable electronic device 100 can be carried about and nurtured by the user (the player of the game) at any time. The attributes of the appearing personages and characters nurtured under the care of the user can also be transferred (uploaded) from the portable electronic device 100 to the console of video game station 1 by the user. In this case the appearing personages and characters whose attributes have been changed can be incorporated in the program being run on the master video game station 1 and made to act in the program.

Thus, as described above, it is possible to implement a video game in which cooperative operation can be carried out by sharing the attribute data of personages and the like with both the video game station 1 constituting the master and portable electronic device 100 constituting the slave and by causing the attribute to change in each of these devices.

Next, a game played using the above-mentioned video game station 1 serving as the master and the portable electronic device 100 serving as the slave will be described in detail. For the sake of simplicity, the video game station 1 shall be referred to simply as the "master" and the portable electronic device 100 as the "slave" below.

This game is purchased from among games during the flow of a game in progress. For example, a mini-game which is a game contained in a game is purchased at a store appearing the game and downloaded to the slave. A game that has been downloaded to the slave can be run independently on the slave.

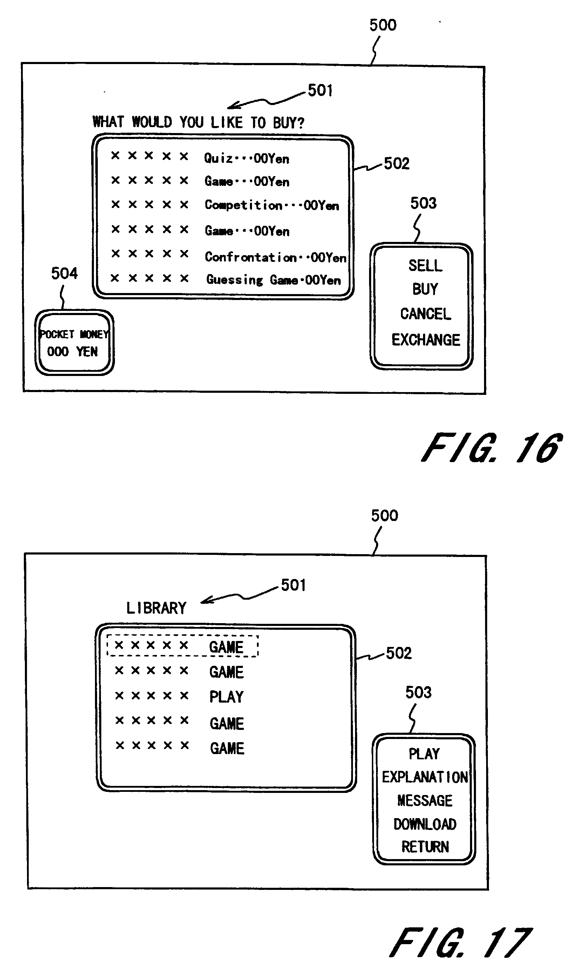

As shown in Fig. 16, a display of a screen for purchasing a game from among games includes a title 501 approximately at the top center of a display screen 500, a game-list display area 502 at the approximate center of the screen, an operation display area 503 at the lower right, and a pocket-money display area 504 at the lower left.

The title 501 indicates the content being displayed on the screen. Since a game can be purchased using this screen, "What would you like to buy?" is displayed as the title 501.

A list of games that can be purchased by a player is being displayed in the game-list display area 502. Specifically, games and their prices are being displayed in the manner "xxxxx Quiz ... 00 Yen", "xxxxx Game ... 00 Yen", "xxxxx Competition ... 00 Yen", "xxxxx Confrontation ... 00 Yen" and "xxxxx Guessing Game 00 Yen".

Operations "Sell", "Buy", "Cancel" and "Exchange" are being displayed in the operation display area 503. One of these operations is selected and executed in regard to the relevant game.

"Pocket Money 000 Yen" is being displayed in the pocket-money display area. An operation in the operation display area 503 can be selected and executed in regard to a desired game in the game-list display area 501 within the limits of the available money being displayed.

Thus, a mini-game that has been purchased within a game can be run on a slave. The results of the game run on the slave can be loaded from the slave to the master and reflected in the game parameters.

A game which one has purchased at a store within a game can be exchanged for another game. In this case the master issues a request to insert the slave into the master. If the slave is inserted into the master, the master internally erases the exchanged game from the master.

More specifically, if the player exchanges a game A for a game B being sold at the store, information to the effect that game A is in possession changes to information to the effect that game B is in possession, whether downloading is taking place in the slave is detected and erasure is performed automatically.

A game that one has purchased can also be sold at a store within a game. In this case, the master issues a request to insert the slave into the master. If the slave is inserted into the master, the master internally erases the sold game from the slave.

More specifically, if the player sells game A to the store, information to the effect that the player possesses game A vanishes, whether game A is being downloaded in the slave is detected and erasure is performed automatically.

Furthermore, mini-games can be exchanged between slaves. In this case, a mini-game that has been transferred to the slave of another party is erased from the slave of the sender.

Thus, a game, i.e., a mini-game, purchased within a game can be selected from a library and subsequently attached message in playing the game using the master, or downloaded to a slave.

A screen indicating the game library will be described with reference to a display screen illustrated in Fig. 17.

A title 501 is displayed approximately at the top center of the display screen 500, a library-list display area 502 at the approximate center of the screen, and an operation display area 503 at the lower right.

Specifically, "library" which represents the content of this screen is being displayed as title 501.

A "xxxxx Game", "xxxxx Game", "xxxxx Play", "xxxxx Game" and "xxxxx Game" are being displayed as a list of the content of the library in the library-list display area 502.

"Play", "Explanation", "Message", "Download" and "Return" are indicated as executable operations on the screen in the operation display area 502.

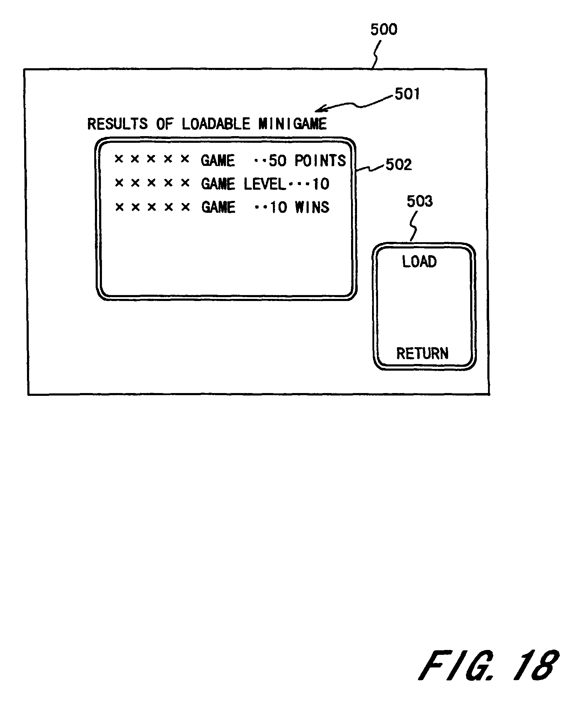

A screen indicating the results of a mini-game capable of being loaded into the master will be described with reference to Fig. 18.

A title 501 is displayed approximately at the top center of the display screen 500, a result display area 502 at the approximate center of the screen, and an operation display area 503 at the lower right.

"Results of Loadable Mini-game", which represents the content of this screen, is being displayed as the title 501.

A "xxxxx Game ... 50 Points", "xxxxx Game ... Level 10" and "xxxxx Game ... 10 wins" are being displayed as the results-display area 503 at the approximate center of the screen.

"Load" and "Return", which are operations that can be executed on the screen, are indicated in the operation display area 503 at the lower right of the screen.

The results of a mini-game played on the slave are loaded into the game of the master and can be added to such parameters as money, life value and level in the game of the master.

It is also possible to carry out game swapping and game copying, etc., by game transfer between slaves and transfer between a master and a slave.

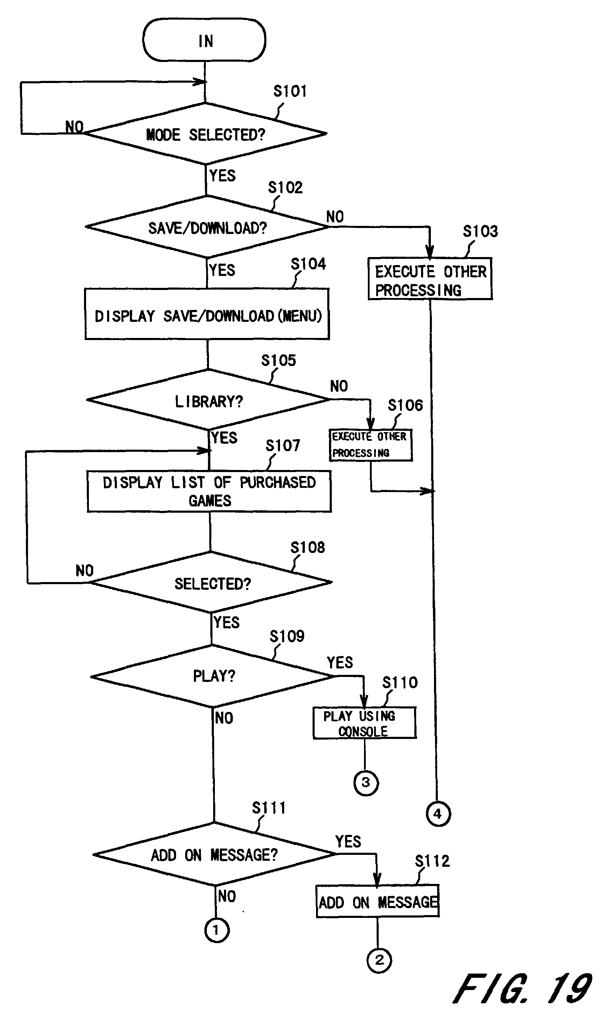

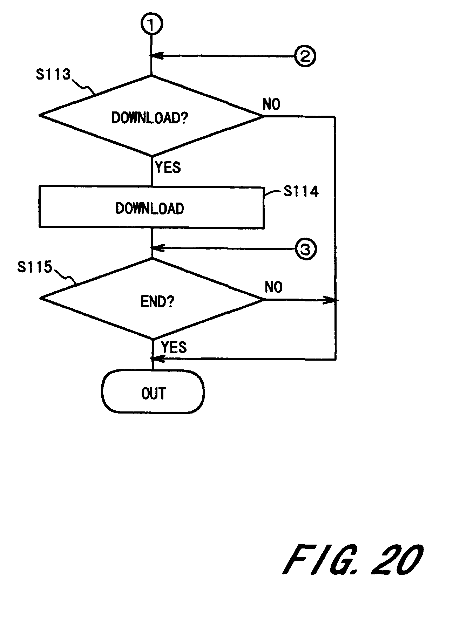

A series of steps regarding the aforementioned mini-game will now be described with reference to the flowchart shown in Figs. 19 and 20.

A mode selection is made at an initial step S101. Control proceeds to step S102 if the result of the mode selection is "YES" and to step S101 if the result of the mode selection is "NO".

Processing branches at step S102 in dependence upon save/download. Specifically, control proceeds to step S104 if the result is "YES" and to step S103 if the result is "NO".

A save/download menu is displayed at step S104 and control then proceeds to step S105.

Other processing is executed at step S103. This series of steps is then exited.

Processing branches at step S105 depending upon a library decision. Specifically, a "YES" decision is rendered and control proceeds to step S107 in case of "Library" and a "NO" decision is rendered and control proceeds to step S106 if the item is not "Library".

Other processing is executed at step S106. This series of steps is then exited.

A list of purchased games is displayed at step S107 and control then proceeds to step S108.

Processing branches at step S108 in dependence upon "Selected". Specifically, a "YES" decision is rendered and control proceeds to step S109 in case of "Selected" and a "NO" decision is rendered and control returns to step S107 if no selection has been made.

Processing branches at step S109 depending upon "Play". Specifically, a "YES" decision is rendered and control proceeds to step S110 in case of "Play" and a "NO" decision is rendered and control proceeds to step S111 if a game is not to be played. A game is played on the master at step S110 and control then proceeds to step S115.

Processing branches at step S111 depending upon whether a message is added on. Specifically, a "YES" decision is rendered and control proceeds to step S112 if a message is added on, and a "NO" decision is rendered and control proceeds to step S113 if a message is not added on.

A message is added on at step S112 and control then proceeds to step S113.

Processing branches at step S113 depending upon "Download". Specifically, a "YES" decision is rendered and control proceeds to step S114 in case of "Download", and a "NO" decision is rendered and this series of steps is exited if downloading is not carried out.

Downloading is performed at step S114 and control then proceeds to step S115.

Processing branches at step S115 depending upon whether this series of steps is to be exited. Specifically, a "YES" decision is rendered and processing ends if the series of steps is to be exited; otherwise, a "NO" decision is rendered and processing continues.

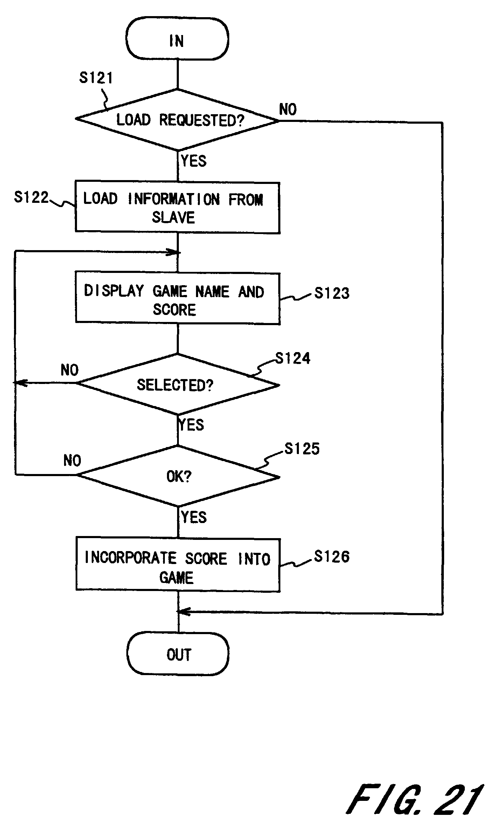

Steps executed on the master side in regard to a mini-game will now be described with reference to a flowchart shown in Fig. 21.

Processing branches at an initial step S121 in dependence upon whether there is a load request. Specifically, a "YES" decision is rendered and control proceeds to step S122 if there is a load request, and a "NO" decision is rendered and this series of steps is exited if there is no load request.

Information from a slave is loaded at step S122, and the game name and score are displayed at step S123. Control then proceeds to step S124.

Processing branches at step S124 in dependence upon "Selected". Specifically, a "YES" decision is rendered and control proceeds to step S125 in case of "Selected" and a "NO" decision is rendered and control returns to step S123 if no selection has been made.

Processing branches at step 125 in dependence upon "OK". Specifically, control proceeds to step 126 in case of "OK", otherwise "NO" decision is rendered and control proceeds to step 123.

A score is incorporated into the game at step S126 and then this series of steps is exited.

Described next will be transfer of a game personage or character between a master and a slave. By performing a prescribed operation in a game, a personage or character, which is an object that is displayed on the screen of the master or slave, is moved between the screens of the master and slave.

The transfer of a character is carried out by manipulating the personage and the character in relation to a specific object that appears in the game. For the sake of simplicity, "personage" and "character" will be referred to collectively as "character" hereafter.

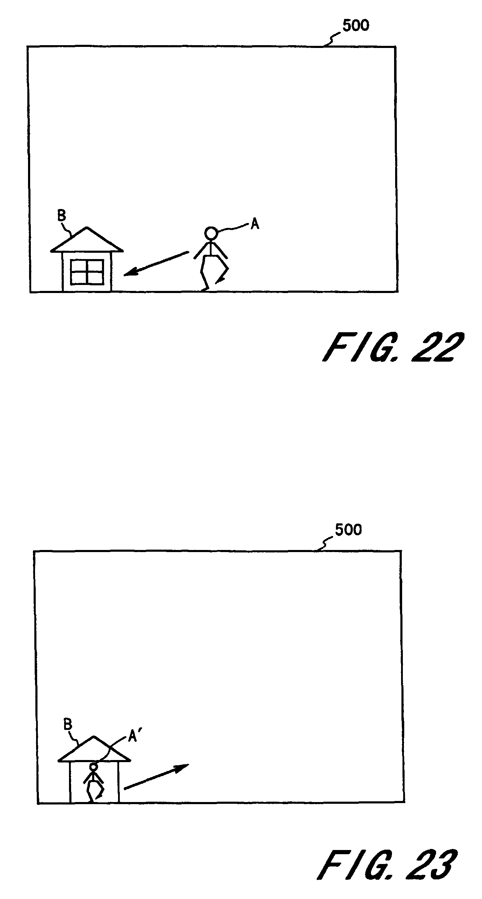

A screen on which a character is capable of being transferred on the master side will be described with reference to the display screen 500 shown in Fig. 22.

A character A and a house B are being displayed on the screen. When the character A is situated in the house B, the character A is moved from the screen of the master to the screen of the slave. That is, when the controller is used to move the character A to the house B, the character A is transferred to the slave automatically. The character A then is displayed on the screen of the slave.

Conversely, the character can also be moved from the screen of the slave to the screen of the master. When the character is moved from the slave to the master, the character appears as a character A' outside the house B of the display screen 500 in Fig. 23. That is, when the character A' is moved, it is transferred automatically from the slave to the console. A specific example of operation is opening a door to the house.

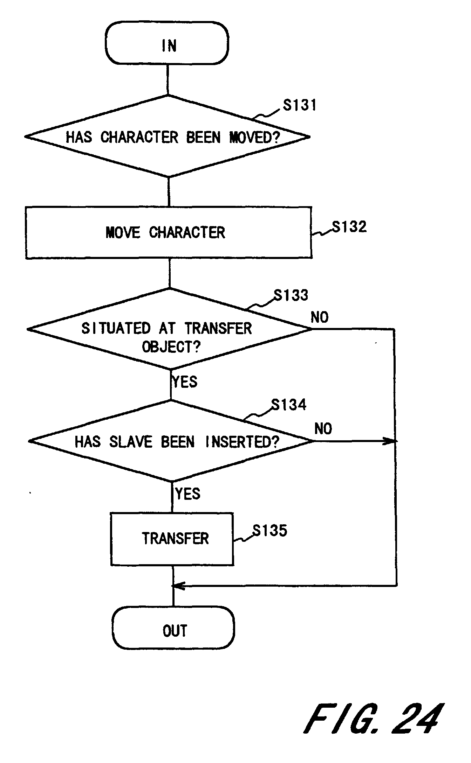

A series of operations executed when a character is transferred from the master to the slave will be described with reference to a flowchart shown in Fig. 24.

It is determined at an initial step S131 whether a character icon has been moved. This is followed by step S132, at which the character moves if it has been moved. Control then proceeds to step S133.

Processing branches at step S133 in dependence upon whether the character is situated at a transfer object. Specifically, a "YES" decision is rendered and control proceeds to step S134 if the character is situated at a transfer object, and a "NO" decision is rendered and this series of steps is exited if the character is not situated at a transfer object.

Processing branches at step S134 depending upon whether the slave has been inserted. Specifically, a "YES" decision is rendered and control proceeds to step S135 if the slave has been inserted into the master, and a "NO" decision is rendered and this series of steps is exited if the slave has not been inserted into master.

Processing for transferring a character from the master to the slave is carried out at step S135. This series of steps is then exited.

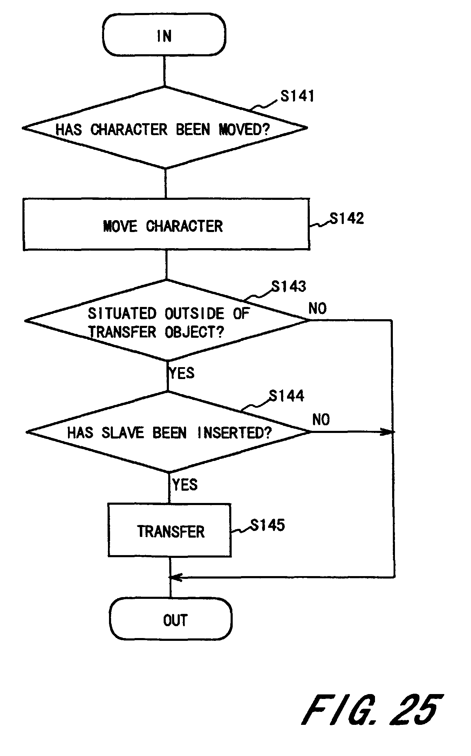

A series of steps executed when a character is transferred from the slave to the master will be described with reference to a flowchart shown in Fig. 25.

Processing branches at an initial step S141 in dependence upon whether a character icon has been moved. Since the character has been moved at step S141, the icon moves at the next step S142. Control then proceeds to step S143.

Processing branches at step S143 in dependence upon whether the character is situated at a transfer object. Specifically, a "YES" decision is rendered and control proceeds to step S144 if the character is situated at a transfer object, and a "NO" decision is rendered and this series of steps is exited if the character is not situated at a transfer object.

Processing branches at step S144 depending upon whether the slave has been inserted into the master. Specifically, a "YES" decision is rendered and control proceeds to step S145 if the slave has been inserted into the master, and a "NO" decision is rendered and this series of steps is exited if the slave has not been inserted into the master.

It should be noted that a character capable of being moved between the screen of the master and the screen of the slave in the manner described above vanishes from the screen of the master when it is moved from the master to the slave and vanishes from the screen of the slave when it is moved from the slave to the master; the character does not appear on the screens of both the master and slave at the same time.

Thus, a character movable between the master and the slave can be treated just as if it actually existed.

The above-mentioned character is handled as a virtual unique entity in the memories of the master and slave when it is transferred between the master and the slave.

A recording medium will be described next. The recording medium has program data, which is executable by an information processor, recorded thereon in a manner capable of being read out. The recording medium is used in an information processing system comprising a master, which is a first information processor capable of reading out the program data that has been recorded on the recording medium and of performing control based upon the program data, operating means for entering operating information, display means for processing an image generated by the information processor based upon the operating means, and a slave, which is a second information processor connected to the master and capable of inputting information to and outputting information from the master and having at least an operating unit and a display unit. Program data for causing the information processor to execute processing has been recorded on the medium in a manner capable of being read out, the processing including a display step of displaying one or a plurality of virtual items on a screen formed by a program that runs on the master, and a load step of loading information, which corresponds to a virtual item that has been selected on the screen, into the slave.

Further, a recording medium is used in an information processing system comprising a master capable of reading out program data that has been recorded on the recording medium and of performing control based upon the program data, operating means for entering operating information, display means for displaying an image generated by the information processor based upon the operating means, and a slave, which is connected to the master, capable of inputting information to and outputting information from the first information processor and having at least an operating unit and a display unit. Software program data, which is capable of being run at least on the master, and time are recorded on the recording medium in a manner capable of being read out Program data for causing the information processor to execute processing has been recorded on the medium in a manner capable of being read out, the processing including a step of displaying an image, which is associated with the slave, on a screen formed by software that runs on the master, a transfer step of transferring data representing a character to the slave when the position of the character is a display position of an image associated with the slave, a step of re-transferring the character data from the slave when a command indicating that the character is to be returned from the slave has been applied, and a step of making it possible to reuse the re-transferred character data on the screen formed by the software.

## Claims

1. A portable electronic device equipped with an interface for making a connection to a master having a program executing function, characterized by comprising:
program storage means for storing a program;
control means for controlling execution of said program;
display means for displaying information in accordance with the program executed; and
operation input means for operating the program, wherein a program capable of being executed independently by a slave is transmitted by an operation performed during execution of the program of the master.

2. The portable electronic device according to claim 1,
characterized in that the connected master is a video game station, and a mini-game capable of being executed independently by the slave is transferred from the connected master to said storage means.

3. The portable electronic device according to claim 1, characterized in that a program that has been transferred from said master to the slave and is capable of being executed independently by the slave is capable of being transferred back to the master.

4. The portable electronic device according to claim 3, characterized in that the connected master is a video game station, a mini-game capable of being executed independently by the slave is transferred from the connected master to said storage means, and the mini-game is capable of being transferred to said master together with results of the mini-game in said slave.

5. A portable electronic device equipped with an interface for making a connection to a master having a program executing function, characterized by comprising:
program storage means for storing a program;
control means for controlling execution of said program;
display means for displaying information in accordance with the program executed; and
operation input means for operating the program, wherein an object in the program of the master is moved to display means of a slave by an operation performed during execution of the program.

6. The portable electronic device according to claim 5, characterized in that said master has display means for displaying information in accordance with the program executed, and one object displayed on said display means is moved to display means of said slave by performing an operation in relation to another object displayed on said display means.

7. The portable electronic device according to claim 5, characterized in that an object that has been moved from said master to the display means of said slave is moved to said master by operating said operation input means.

8. The portable electronic device according to claim 7, characterized in that said object is transferred between the master and the slave as a virtual unique entity.

9. An entertainment system comprising a master having a program executing function and a slave equipped with an interface for making a connection to the master, characterized in that:
said master has control means for transferring information accompanying execution of said program to said slave and for reading in information from said slave; and
said slave has:
program storage means for storing a program;
control means for controlling execution of said program;
display means for displaying information in accordance with the program executed, and
operation input means for operating the program;
wherein a program capable of being executed independently by a slave is transmitted by an operation performed during execution of the program of the master.

10. The entertainment system according to claim 9, characterized in that said master is a video game station, and a mini-game capable of being executed independently by the slave is transferred from said master to said storage means.

11. The entertainment system according to claim 10, characterized in that a program that has been transferred from said master to the slave and is capable of being executed independently by the slave is capable of being transferred back to the master.

12. The entertainment system according to claim 11, characterized in that the master is a video game station, a mini-game capable of being executed independently by the slave is transferred from said master to said storage means, and the mini-game is capable of being transferred to said master together with results of the mini-game in said slave.

13. An entertainment system comprising a master having a program executing function and a slave equipped with an interface for making a connection to the master, characterized in that:
said master has control means for transferring information accompanying execution of said program to said slave and for reading in information from said slave; and
said slave has:
program storage means for storing a program;
control means for controlling execution of said program;
display means for displaying information in accordance with the program executed; and
operation input means for operating the program;
wherein an object in the program of the master is moved to display means of a slave by an operation performed during execution of the program.

14. The entertainment system according to claim 13, characterized in that said master has display means for displaying information in accordance with the program executed, and one object displayed on said display means is moved to display means of said slave by performing an operation in relation to another object displayed on said display means.

15. The entertainment system according to claim 13, characterized in that an object that has been moved from said master to the display means of said slave is moved to said master by operating said operation input means.

16. The entertainment system according to claim 15, characterized in that said object is transferred between the master and the slave as a virtual unique entity.

17. A recording medium having program data, which is executable by an information processor, recorded thereon in a manner capable of being read out, the recording medium being used in an information processing system comprising a first information processor for reading out the program data that has been recorded on the recording medium and for performing control based upon said program data, operating means for entering operating information, display means for processing an image generated by said first information processor based upon said operating means, and a second information processor, which is connected to said first information processor, capable of inputting information to and outputting information from said first information processor and having at least an operating unit and a display unit, characterized in that program data for causing the information processor to execute processing has been recorded on the medium in a manner capable of being read out, the processing including:
a display step of displaying one or a plurality of virtual items on a screen formed by a program that runs on said first information processor; and
a load step of loading information, which corresponds to a virtual item that has been selected on said screen, into said second information processor.

18. The recording medium according to claim 17, characterized in that the information loaded from said first information processor to said second information processor is information comprising any one or a combination of at least program data, image data and voice data.

19. The recording medium according to claim 17, characterized in that the information loaded from said first information processor to said second information processor is information comprising any one or a combination of at least program data, image data and voice data, and program data, which is used by said second information processor for causing this information to be executed by said information processor, has been recorded on the medium in a manner capable of being read out.

20. The recording medium according to claim 17, characterized in that the information loaded from said first information processor to said second information processor is at least software program data; and
program data, which is for causing said information processor to execute the following steps, has been recorded on the medium in a manner capable of being read out:
a step of loading results of processing of software, which runs on said second information processor, into said first information processor by said software program data; and
a step of causing the results of processing loaded by the above-mentioned step to be reflected in processing of software being run on said first information processor.

21. The recording medium according to claim 17, characterized in that program data, which is for causing said information processor to execute the following step, has been recorded on the medium in a manner capable of being read out:
a step of adding on information that is specific to the information that is loaded.

22. A recording medium used in an information processing system comprising a first information processor for reading out program data that has been recorded on the recording medium and for performing control based upon the program data, operating means for entering operating information, display means for displaying an image generated by said information processor based upon said operating means, and a second information processor, which is connected to said first information processor, capable of inputting information to and outputting information from said first information processor and having at least an operating unit and a display unit, wherein software program data, which is capable of being run at least on said first information processor, and time are recorded on the recording medium in a manner capable of being read out, characterized in that program data for causing the information processor to execute processing has been recorded on the medium in a manner capable of being read out, the processing including:
a step of displaying an image, which is associated with said second information processor, on a screen formed by software that runs on said first information processor,
a transfer step of transferring data representing a character to said second information processor when the position of the character is a display position of an image associated with said second information processor;
a step of re-transferring the character data from said second information processor when a command indicating that the character is to be returned from said second information processor has been applied; and
a step of making it possible to reuse the re-transferred character data on the screen formed by said software.
